# EUROPEAN PATENT APPLICATION

(11) **EP 3 964 707 A1**
(43) Date of publication of application: **09.03.2022**
(21) Application number: 20194314.9
(22) Date of filing: 03.09.2020
(51) Int. Cl.: F03D 7/04, F03D 80/50

(54) **CONTROLLING THE OPERATION OF A WIND TURBINE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

A method of controlling the operation of a wind turbine is provided, wherein a control scheme is determined for the wind turbine (110), wherein the control scheme specifies for a future period of time at least a first operating period (tl) in which the wind turbine (110) is operated to provide an output of electrical power to a power grid (200) and at least one shutdown period (t2) in which the wind turbine (110) is shut down, the shutdown period (t2) being arranged temporally after the first operating period (tl). The wind turbine (110) is operated in accordance with the control scheme. Determining the control scheme comprises the obtaining of input data, wherein obtaining input data comprises at least monitoring operation of the wind turbine (110) to obtain monitoring data related to the integrity of the wind turbine (110), and obtaining weather data indicating weather conditions, and the forecasting of two or more operating parameters. Based on the at least two or more forecasted operating parameters of the wind turbine (110), the control scheme is determined for the wind turbine (110) such that one or more optimization parameters are optimized.

## Description

### FIELD OF THE INVENTION

The present invention relates to a method of controlling the operation of a wind turbine, to a respective control system and to a computer program for controlling such wind turbine.

### BACKGROUND

The contribution of wind turbines (WTs) to the production of electric energy is continuously increasing. Power grid operators thus have to rely to a higher extent on the availability of electric power from wind farms, and wind farms have to provide a higher contribution to power grid stability. Respective requirements are laid down in the so-called grid code.

Wind turbines, on the other hand, include a number of vital mechanical and electrical components that have a limited lifetime and that need to be serviced regularly. Failure to service respective components may lead to the need to shut down the wind turbine, resulting in a loss of energy production. Wind turbines are therefore serviced at regular fixed time intervals.

In view of the above, it is desirable to reduce the risk of failure of a wind turbine. Furthermore, it is desirable to generate a maximum amount of electrical energy by such wind turbine. It is in particular desirable to provide the generated electric energy to the electrical power grid in such a way that grid stability is enhanced. For example, when providing excessive amounts of energy to the grid when the demand is low, or when not providing any energy to the power grid when demand is high, grid stability may suffer and compensation may be difficult.

### SUMMARY

There is accordingly a need to mitigate at least some of the drawbacks mentioned above and to provide an improved control of such wind turbine. In particular, there is a need to reduce the risk of failure of the wind turbine and to generate electric energy by the wind turbine at times when such electric energy is demanded.

This need is met by the features of the independent claims. The dependent claims describe embodiments of the invention.

According to an embodiment of the invention, a method of controlling the operation of a wind turbine is provided, which comprises the determining of a control scheme for the wind turbine and the operating of the wind turbine in accordance with the control scheme. The control scheme specifies for a future period of time at least a first operating period in which the wind turbine is operated to provide an output of electrical power to a power grid, and at least one shutdown period in which the wind turbine is shut down, the shutdown period being arranged temporarily after the first operating period. Determining the control scheme comprises obtaining input data. The input data is obtained at least by monitoring operation of the wind turbine to obtain monitoring data related to the integrity of the wind turbine and obtaining weather data indicating weather conditions. It further comprises forecasting, by a processing unit, two or more operating parameters of the wind turbine, the forecasting including at least the forecasting of wind turbine health on the basis of the monitoring data and the forecasting of wind conditions on the basis of the obtained weather data. Based on the at least two or more forecasted operating parameters of the wind turbine, the control for the wind turbine is determined such that one or more optimization parameters are optimized. Optimization of the one or more optimization parameters includes one or a combination of maximizing a wind turbine energy production, minimizing a risk of wind turbine failure, maximizing a usable energy production by maximizing the electric energy produced by the wind turbine at times of high/increased (e.g. higher than average) energy demand on the power grid, minimizing wind turbine costs, maximizing a revenue from electric power generated by the wind turbine, maximizing a wind turbine availability, and maximizing a wind turbine utilization.

For example, determining the control scheme at least comprises determining a point in time at which the shutdown period starts; it may additionally specify a limitation of the output power of the wind turbine during the first operating period. The shutdown period may for example be a service period in which the wind turbine can be serviced, in which for example damaged or worn out parts can be replaced. By such method, it is possible to automatically determine the shutdown period, during which the wind turbine may be serviced, such that a low risk of damage is achieved, since the determination of the control scheme considers the forecasted wind turbine health. On the other hand, the energy production, and in particular the usable energy production, can be maximized, as both the forecasted wind conditions and the forecasted wind turbine health are considered. The control scheme will for example be determined such that the shutdown period is scheduled at low wind conditions (lower than average), which maximizes the usable energy production (impact of the shutdown on the energy output of the wind turbine is only minimal) and minimizes risk, also with respect to the safety of the service personnel. The control scheme may include the reduction of energy output from the wind turbine, for example to prolong the life of a wind turbine component that has a high chance of failure, so that the shutdown period can be scheduled in a way that ensures minimal risk of failure while maximizing the usable energy production. Preferably, a combination of at least two, three or more optimization parameters are optimized in the determination of the control scheme, which may include at least minimization of risk of wind turbine failure and maximization of usable energy production.

Usable energy production considers the energy demand on the power grid and thus the time at which the energy is provided by the wind turbine; it is maximized by maximizing the energy production at times of high energy demand on the power grid. Usable energy production may be estimated based on forecasted wind conditions and forecasted energy demand. It may further consider forecasted wind turbine health (risk of failure) and limitations to the power output of the wind turbine. Usable energy production may for example be determined by forecasting the energy production over the respective period of time, in which power generated and supplied to the power grid at times of higher power demand is weighted higher than power generated and supplied to the power grid at times of lower power demand.

The shutdown period may follow directly upon the first operating period. It may have a length of 1 hour or more, or even one day or more. It is in particular sufficiently long to allow the servicing of the wind turbine. The control scheme may include a second operating period that is temporally arranged after the shutdown period.

Obtaining input data may comprise acquiring current data from a WT sensor or weather sensor and/or acquiring current data from a data source, such as a WT or weather database. In an embodiment, obtaining input data comprises obtaining power grid data indicative of an energy demand of the power grid (for example grid reception capacity), wherein forecasting the two or more operating parameters of the wind turbine further comprises the forecasting of energy demand based on the obtained power grid data. The optimization of the one or more optimization parameters comprises the maximization of the usable energy production. The electric energy produced at times of higher demand may for example simply be weighted higher than energy produced at times of lower demand, allowing the maximization of usable energy production. By providing electric power to the power grid at times of higher demand, grid stability may be improved. Likewise, by not providing electric power to the grid when demand is low, the grid may likewise be stabilized. Determination of the control scheme may schedule the shutdown period accordingly, so that the shutdown period is scheduled at times of low forecasted energy demand.

In a further embodiment, obtaining input data further comprises obtaining electricity price information for electric power supplied by the wind turbine, wherein forecasting the two or more operating parameters of the wind turbine further comprises the forecasting of electricity price for electric power produced by the wind turbine. Determination of the control scheme may then be additionally be based on the forecasted electricity price, wherein the optimization of the one or more optimization parameters comprises the maximization of revenue from electric power generated by the wind turbine. Accordingly, the shutdown period may be scheduled in the control scheme such that only little revenue is lost. It should be clear that the electricity price is generally proportional to the energy demand (e.g. to the total demand and/or to the net demand, i.e. the total demand for electric energy less the supply of electric energy by other power generation sources), so that information on the energy demand of the power grid can be obtained by monitoring and forecasting the electricity price. Grid stability can thus likewise be increased by the wind turbine providing electric energy to the power grid when electricity price is high (high energy demand) and shutting down the wind turbine for service when electricity price is low (low energy demand, e.g. low total energy demand or too much supply from other power generation sources, i.e. low net demand). It should be clear that the features of these embodiments may be combined, for example the demand and electricity price may both be monitored and usable energy production and revenue may both be maximized.

In an embodiment, the determining of the control scheme for the wind turbine comprises the application of an evaluation matrix to at least said two forecasted operating parameters. The evaluation matrix assigns to the combination of values of the at least two forecasted operating parameters (i.e. to the input values) an output value. The output value is a priority value that indicates a priority of scheduling the shutdown period in the control scheme of the wind turbine. The output values of the matrix may be configured for the respective (possible) combinations of input values such that the output value provided for a combination of input values results in a control scheme that optimizes the one or more optimization parameters for these input values. As an example, the evaluation matrix may give out a medium priority value if wind turbine health is low and wind conditions are likewise low (low wind speeds), since only little power is lost during a premature shutdown of the wind turbine due to component failure. On the other hand, if the forecasted health of the wind turbine is low while wind conditions are high, the evaluation matrix may give out a high priority value in order to ensure operability of the wind turbine to be able to exploit the high wind speeds.

The method may furthermore comprise the training of the values of the evaluation matrix by using a training method. The training may for example include the initial setting up of values for respective forecasted situations of the operating parameters and the use of training data to train the evaluation matrix. The matrix may likewise be trained during operation, for example if the output of the matrix is revised by a wind turbine operator, then the revised value may be used as a training value to adjust the values of the evaluation matrix.

Preferably, the evaluation matrix employs as input three operating parameters that include the forecasted wind turbine health, the forecasted wind conditions and one of a forecasted energy demand on the power grid or a forecasted electricity price for electric power produced by the wind turbine. The evaluation matrix may then assign to the combination of values of the three operating parameters a respective priority value. Such method allows an effective prioritization of the shutdown period in such a way that one or a combination of the above optimization parameters are optimized, which preferably include at least the risk of wind turbine failure and the usable energy production.

The values of the input to the evaluation matrix, in particular the respective operating parameters, may for example be quantized, i.e. they may have two, three, four, five or more distinct levels for the parameter value. For example, the value range of the operating parameter may be split into respective sections (or bins), and the corresponding section value may then be employed. Accordingly, there are only a limited number of combinations of input values for the matrix, so that the evaluation matrix only has a limited number of possible output values, thus making the determination of the output value less complex and reducing the required processing power and memory. For example, three levels for the values of the operating parameter may be used, such as low, medium and high (e.g. low WT health, medium WT health, high WT health; or low wind conditions, medium wind conditions and high wind conditions).

For example for the parameter "wind turbine health", the distinct (quantized) values may be obtained by obtaining a health graph (which may for example indicate overall remaining component life for the wind turbine components, time to failure or the like), dividing the graph into regions using thresholds, and assigning a health value to each region. As an example, a region with low values of remaining component life may indicate a low health value, a region of medium remaining component life may indicate a medium health value and a region in which the remaining component life is high may indicate a good/high health value.

The output of the matrix may be a number, and respective thresholds may likewise be employed to assign predetermined priorities (e.g. low, medium and high) to the output priority value. Such priority may then be used in the determination of the precise timing of the shutdown period.

In particular, the priority value may determine the priority to shut down the wind turbine for servicing. The control scheme may be determined to comprise a shorter first operating period the higher the priority to shut down the wind turbine is. For example, if the priority value has a higher value, a period of time is determined that ends closer to a current date within which the shutdown period is scheduled (e.g. between now and 3-4 days). If the priority value is a lower value, a period of time is determined that ends further away from the current date within which the shutdown period is scheduled (e.g. three, four or more weeks). Further, an intermediate time period (e.g. ending between 1-2 weeks after the current date) may be used for an intermediate priority. A finer granularity with further intermediate values is conceivable.

If the priority value is below a first threshold, it may be determined that there is no need to schedule a shutdown period for the wind turbine, i.e. to perform a service. The method may then be repeated after a certain period of time (e.g. at a point in time between one day and two weeks, e.g. one week). Accordingly, the respective operating parameters may then again be forecasted based on respectively monitored and obtained data and the evaluation matrix may again be employed for determining a new priority value.

For example, the evaluation matrix may give out a low priority (a priority value below a second threshold) if the wind turbine health is high, if the wind conditions are medium and if the energy demand or electricity price is medium. Such prioritizing of the shutdown period keeps the risk low while at the same time allowing the scheduling at low priority and thus within a longer period of time, so that only little energy production is lost, since the wind conditions are only medium and a precise date may be selected that results in the lowest loss of produced energy. As another example, if both, energy demand and wind conditions are medium, and the WT health is likewise medium, the evaluation matrix will provide a higher priority value, so as to keep the risk of failure low. It should be clear that the training period for the matrix may include the evaluation of the optimization parameters for different combination of the operating parameters put into the matrix, and the setting of the matrix values such that for each combination of input values, optimal optimization parameters are obtained.

The evaluation matrix may be evaluated for a particular point in time of the forecasted operating parameters, such as one day or one week from the current date. It is also conceivable to average the forecasted operating parameters over several days and use such averaged forecasted operating parameters, such as one week from the current date. It is also conceivable to average the forecasted operating parameters over several days and use such averaged forecasted operating parameters as input for the evaluation matrix. For example, the forecasted values from the range between five to ten days from the current date may be averaged.

In other embodiments, the evaluation matrix may be implemented as a decision logic or a decision logic may be used alternatively to the evaluation matrix. Based on the values of the input forecasted operating parameters, the decision logic may then make decisions that result in the respective priority value. Likewise, the decision logic may be adapted on the basis of respective training data to result in a priority value that optimizes the one or more optimization parameters.

In an embodiment, optimizing the one or more optimization parameters comprises estimating the one or more optimization parameters for different candidate control schemes that comprise differences in the timing of the shutdown period and/or differences in a limitation of the electrical power generated by the wind turbine during the first operating period. The control scheme may then be selected for which the one or more optimization parameters best meet a respective optimization target (i.e. are minimized or maximized, as indicated above). For example, thresholds may be employed for determining how well an optimization parameter meets the optimization target (such as thresholds for the risk of damaging the wind turbine, wherein for example if the WT health (e.g. a remaining lifetime of a wind turbine component) is below a threshold, the risk is considered to be high, if it is between the lower and an upper threshold, the risk is considered to be medium, and if it is above the upper threshold, it is considered to be low). Values that indicate how good a respective optimization parameter achieves the optimization target may for example be employed for each optimization parameter, and these may be weighted to arrive at an overall indication how well the candidate control scheme achieves an optimization of the employed optimization parameters. The weights may for example be determined based on the importance of the parameter for the wind turbine operator. For example, minimization of risk and maximization of usable energy production may receive high weights.

The above-mentioned priority value (obtained from the evaluation matrix) may determine a period of time within which the shutdown period is to be scheduled. The period of time may be determined to end closer to a current date the higher the priority value is (see above). The candidate control schemes may then for example vary the timing of the shutdown period within the respective time period that corresponds to the priority value obtained from the evaluation matrix. For example with each priority (low, medium, high) derived from the priority value, a time period of a certain length may be associated, such as three weeks for a low priority, two weeks for a medium priority and one week or few days (one to four) for a high priority, each starting at the current date. The candidate control schemes may then vary the date for the shutdown period (i.e. the point in time at which the shutdown period commences) within the respective priority time period. It is also conceivable that non-overlapping time periods are employed, for example for a high priority, the date of the shutdown period is scheduled within the next week from the current date, for a medium priority within the period starting one week after the current date to two weeks after the current date, and for low priority within the period starting from two weeks after the current date to three, four or more weeks after the current date).

Accordingly, the control scheme determined according to the method may comprise the shutdown period at a point in time, in particular at a particular date, at which one or the combination of optimization parameters best meet their optimization target.

Optimizing the one or more optimization parameters may further comprise estimating one or more further operating parameters that depend on the respective candidate control scheme (which further operating parameters can form part of the above-mentioned two or more operating parameters). The one or more further operating parameters may include at least a forecasted electric energy generation by the wind turbine, and the one or more further operating parameters may be used to estimate the one or more optimization parameters for the respective candidate control scheme. As an example, the forecasted electric energy generation will depend on the wind conditions, in particular the wind speed, and may further depend on the wind turbine health. It will further depend on whether the output power of the wind turbine is limited during the first operating period according to the control scheme, how long the first operating period is, and what the wind conditions are during the shutdown period in accordance with the control scheme. The forecasted electric energy generation can then further be used, for example in combination with the information on the energy demand, to estimate the optimization parameter "usable energy production" for the respective candidate control scheme. The candidate control scheme can then be selected for which the usable energy production is maximum, or for which the respective combination of optimization parameters is optimized.

To be comparable, the optimization parameters may be estimated for the candidate control schemes over the same period of time, e.g. for few weeks, such as one, two, three or four weeks.

The one or more of the optimization parameters and/or one or more of the operating parameters (which includes the further operating parameters) may be estimated based on a correlation with one or more other optimization parameters and/or one or more other operating parameters. The method may optionally comprise training the correlation values based on historical data for the wind turbine or for a corresponding wind turbine and/or based on input of a wind turbine operator. For example, the power output of a wind turbine may be correlated with the respective wind conditions (wind speed) and to the wind turbine health status. Past data for particular wind conditions and turbine health for which the power output of the wind turbine is known can be used to derive an estimation of the respective correlation value (designated herein as X). Likewise, optimization parameters may be estimated by using a respective correlation relationship. Preferably, the risk of wind turbine failure is estimated based on a correlation with the forecasted wind turbine health. Revenue might be correlated with the utilization of the wind turbine and the risk of wind turbine failure, as well as the cost including cost for service and cost of failure. By using such correlations between the optimization parameters and/or operating parameters, the estimation of the respective quantities can be improved when forecasting the respective quantities to derive the control scheme. The correlation values X can be updated/improved during operation as new data becomes available. In particular, the correlation values may be obtained and improved by using methods such as deep learning and/or reinforcement learning.

The method may further comprise obtaining one or more supplementary parameters and determining the control scheme under consideration of the one or more supplementary parameters. The supplementary parameters may for example include a capacity of wind turbines of a wind farm (of which the wind turbine forms part) to compensate an output power limitation of the wind turbine, a forecasted availability of a spare part, a forecasted availability of a service technician, and/or a skill level of an available service technician. For example, if the shutdown period is scheduled for a day on which the required spare part is not available, the shutdown period may need to be prolonged, resulting in reduced energy production and increased costs. Likewise, if a service technician is not available, the shutdown period may need to be prolonged. These supplementary parameters may for example be used to exclude certain days within the respective period of time for scheduling the shutdown period and/or may be used for a more precise estimation of the optimization parameters, such as usable energy production or risk of failure. The skill level of the available service technician may for example have an impact of the risk of failure of the wind turbine.

These supplementary parameters may for example be employed when estimating the optimization parameters for the different candidate control schemes, or may be employed in a decision logic that derives the control scheme by decisions that depend on the value of the respective operating and supplementary parameters.

In an embodiment, the determining of a control schedule by optimizing the one or more optimization parameters comprises employing a decision logic that determines the control schedule by making a decision on the scheduling of the shutdown period and/or on a limitation of the power output of the wind turbine during the first operating period. The decision logic makes the respective decision on the basis of one or more of the forecasted operating parameters, wherein the decision stages of the decision logic are configured such that the resulting control scheme optimizes the one or more optimization parameters. For example, the decision logic may check if the availability of spare parts/service technician within the next few days and if these are available, continue operation with nominal power production or only slightly de-rated power production, and may schedule the service within these next few days. Accordingly, the risk is minimized as operation only continues for few days, while the energy production is maximized, since the wind turbine continues to operate in high wind conditions.

Such decision logic may be used in combination with the above-mentioned evaluation matrix, it may for example determine the date of the shutdown period in accordance with the priority value determined by the evaluation matrix. The decision logic may consider the one or more supplementary parameters and/or the further operating parameters.

As a particular example, the wind turbine may be part of a wind farm. If a higher than average priority to schedule the shutdown period is determined on the basis of the two or more forecasted operating parameters, the method may comprise determining if wind turbines of the wind farm are capable of compensating an output power limitation of the wind turbine. If this is the case, then the control scheme may be determined to include a limitation of the output power of the wind turbine during the first operating period and may further include the control of the other wind turbines so as to compensate for the output power limitation during the first operating period. Such decision taking ensures that the risk of wind turbine failure is kept low, due to de-rating the output power, while power generation is kept high, thereby optimizing the respective optimization parameters. If the wind farm is not capable of compensating the output power limitation of the wind turbine, and if wind conditions/energy demand is high, the priority for scheduling the shutdown period may be set to a high (the highest) value and may be scheduled for the next few days (e.g. within one to four days), while output power of the wind turbine is not limited. Thereby, the risk is kept low while energy production is kept high.

Such respective check for whether compensation of power limitation is possible may for example be comprised in the above-mentioned decision logic. Wind turbines of the wind farm may for example be capable of operating in operating modes that increase the power output, such as specific operation modes to optimize performance at rated power or at cutout wind speed. Examples are a high wind ride-through (HWRT; a mode in which the rotor speed and the power output of the wind turbine are reduced with increasing wind speeds in order to prevent the shutdown of the wind turbine), power boost mode (in which the energy production from a wind turbine is increased by temporarily increasing the power limit of the wind turbine under certain conditions), or the like. Such modes are known and will not be explained in greater detail here. A respective compensation of an output power limitation of the wind turbine may likewise form part of the above-mentioned candidate control schemes, if the wind farm is capable of providing a respective compensation.

As another example, if the supplementary parameter indicates that spare part and service technician are available within a certain period of time from the current date (for example within one to four days), the control scheme may be determined to comprise the operation of the wind turbine at a non-limited power output or a slightly limited power output (e.g. > 75%) during the first operating period and a shutdown period scheduled within this certain period of time. The shutdown period may be determined to minimize the wind speeds during the shutdown period based on the forecast wind conditions. Again, such scheduling may form part of the above-mentioned decision logic, or may form part of a respective candidate control scheme. Continuation to operate at relatively high power output maximizes the energy production, while the control scheme provides the shutdown period during low wind conditions. As the service is scheduled within a short period of time, the risk is kept low. The method may in particular select the day of the next one to four days on which the lowest forecasted wind speeds are present.

Obtaining monitoring data may include determining if the monitoring data to be obtained is available, and if the monitoring data is not available, performing at least one of: if the monitoring data is not available from a sensor of a wind turbine, obtaining sensor data from one or more other sensors arranged on the wind turbine component or system on which the sensor not providing monitoring data is arranged and deriving the monitoring data from the sensor data of the other sensors (e.g., a bearing may include sensors to measure inner and outer bearing case temperature, and sensors to measure vibration or strain, from which health status can be derived); if the monitoring data is not available from a sensor of the wind turbine, obtaining sensor data from a corresponding sensor of a different wind turbine that has a wind turbine health corresponding to that of the wind turbine and deriving the monitoring data from the sensor data of the different wind turbine (which may be of the same type/model as the wind turbine); if monitoring data, in particular in form of power output, is not available for the wind turbine, estimating the monitoring data from a total power output of a wind farm comprising the wind turbine and from the power output of the other wind turbines of the wind farm. The power output of the wind turbine not providing monitoring data can thus be estimated and used in determining the wind turbine health. Data received from other sensors on the same component or from a corresponding sensor of other wind turbines may accordingly be used as monitoring data to derive the wind turbine health, thereby allowing the determination of wind turbine health also in case of sensor outage or communication loss.

According to a further embodiment, a control system for controlling the operation of a wind turbine is provided. The control system is coupled to one or more sensors of the wind turbine to obtain monitoring data related to the integrity of the wind turbine and is further coupled to a data source for obtaining weather data indicating weather conditions. The control system comprises a processing unit and a memory, wherein the memory stores control instructions which, when executed by the processing unit of the control system, perform any of the methods described herein. By such method, advantages similar to the ones outlined further above may be achieved.

The control system may for example be coupled to or comprised in a wind turbine controller of the wind turbine. It may also form part of a wind farm controller, or may be distributed between such wind turbine controller and wind farm controller.

According to a further embodiment of the invention, a wind turbine or a wind farm comprising such control system is provided.

A further embodiment of the invention provides a computer program for controlling a wind turbine, wherein the computer program comprises control instructions which, when executed by a processing unit of a control system that controls the operation of the wind turbine, in particular the above-mentioned control system, cause the processing unit to perform any of the methods described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a control system according to an embodiment of the invention.
Fig. 2 is a schematic flow diagram illustrating a method of controlling a wind turbine according to an embodiment of the invention.
Fig. 3 is a schematic drawing showing a portion of an evaluation matrix according to an embodiment of the invention.
Fig. 4 is a schematic diagram showing a forecast operating parameter of the wind turbine in form of the health status of a wind turbine according to an embodiment of the invention.
Figs. 5-9 are schematic flow diagrams illustrating the obtaining of a priority value for different combinations of forecasted operating parameters using an evaluation matrix or a decision logic according to an embodiment of the invention.
Fig. 10 is a schematic flow diagram illustrating the determination of a control scheme according to an embodiment of the invention.
Fig. 11 is a schematic flow diagram illustrating the determination of a control scheme according to an embodiment of the invention using a decision logic.
Fig. 12 is a schematic drawing showing a control system according to an embodiment of the invention.
Fig. 13 is a schematic diagram showing forecasted operating parameters and the scheduling of a shutdown period according to an embodiment of the invention.
Fig. 14 is a schematic flow diagram illustrating the obtaining of missing health data for the wind turbine according to an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

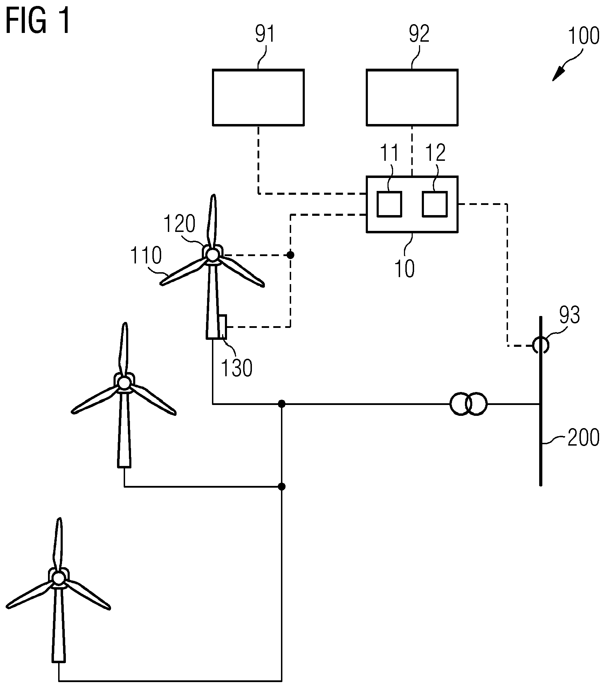

Fig. 1 schematically shows a wind farm 100 including a control system 10 according to an embodiment. Wind farm 100 includes several wind turbines 110 which convert wind energy into electrical energy that is fed into a power grid 200. Wind turbine 110 may have any known configuration and may in particular include a tower, a rotor, a generator receiving rotational mechanical energy from the rotor, a converter, a transformer and a wind turbine controller 120. Several of these components may be arranged in a nacelle of the wind turbine 110. Sensors that provide monitoring data 130 can furthermore be provided for monitoring operation of wind turbine 110, which in particular include sensors for monitoring the integrity and operational functionality of wind turbine components, such as vibration sensors, temperature sensors, strain sensors and the like. Control system 10 receives data on operating parameters of the wind turbine and further supplementary data from different data sources and determines a control scheme, according to which the wind turbine 110 is controlled. Control system 10 may for example form part of a wind turbine controller 120, or may form part of a wind farm controller, or may be distributed between such wind turbine controller 120 and wind farm controller. It may in particular provide control commands to a wind turbine controller 120.

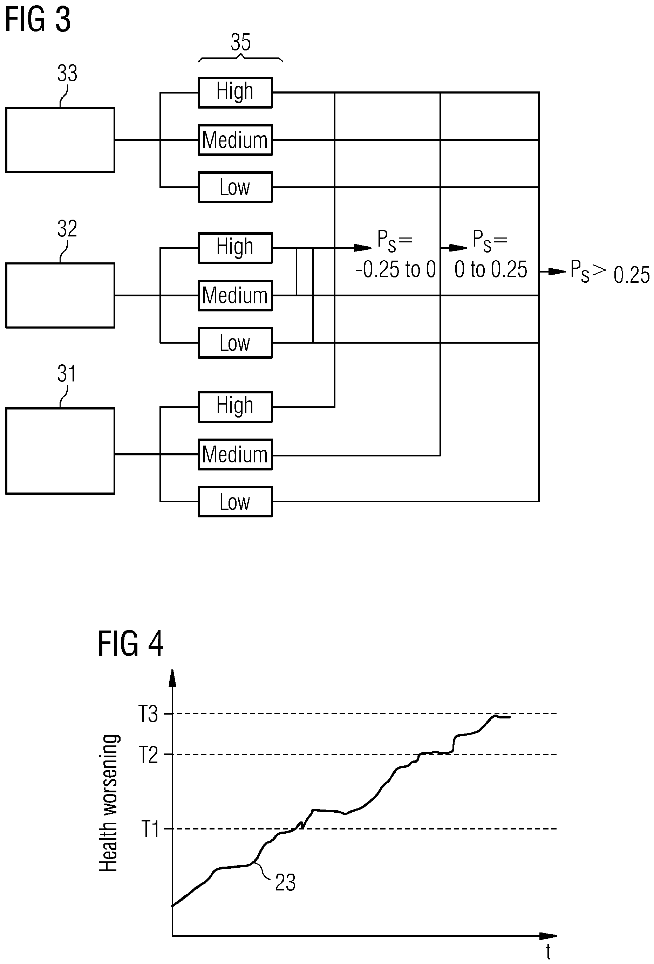

Control system 10 receives monitoring data 130 from the wind turbine sensors. It may receive further monitoring data related to the integrity of the wind turbine, such as data on service requests and corrective work orders. Based on the obtained monitoring data, control system 10 makes a forecast for wind turbine health. Different methods are known for forecasting wind turbine health based on respective sensor data from the wind turbine, and any of such methods may be employed. For example, a risk of failure may be forecasted from the available sensor data, or a remaining time to failure may be forecasted. Forecasting of the wind turbine health may for example include forecasting the risk of failure/time to failure for predetermined components of the wind turbine, such as critical components, including the generator, the converter, the transformer, a cooling system or the like, and determining the risk that the wind turbine needs to seize operation due to failure of one of these components. Besides using monitoring data from sensors of the wind turbine, additional information may be used in such forecasting, such as past service requests, which may be indicative of a near term failure, or the amount of corrective work orders associated with the wind turbine, and the severity of the corrective work orders. Further, fleet data from other wind turbines in the same wind farm or in other wind farms having a similar configuration (e.g. same type/model) and that may face similar wind conditions may be employed in the prediction of wind turbine health. Fig. 4 gives an example showing a graph of forecasted wind turbine health for a certain period of time, for example one, two, three or more weeks. The forecasts will naturally be more precise for the days coming next, and it may be repeated, for example weekly, semi-weekly or daily.

Control system 10 furthermore obtains weather data 91. Control system 10, wind turbine 110 and/or wind farm 100 may for example include weather sensors from which the control system 10 obtains weather data. Weather data may furthermore be obtained from external sources, such as from weather services. Such weather data may furthermore include past weather data, which was for example obtained for the same respective month (e.g. one or more years earlier). Control system 10 will make a forecast for weather conditions for a future period of time, for example for the next month, for the next one, two or three weeks or the like. When forecasting weather conditions, control system 10 will furthermore consider the chance of the occurrence of weather phenomenon, such as typhoons, hurricanes and the like. In particular, it will predict the worst case with the probability of its occurring. The forecasting will thus provide a range of weather data for the future period of time. The weather conditions are thus forecasted with a certain probability for the future period of time. Furthermore, the control system 10 will derive wind conditions from the forecasted weather conditions. The forecasted wind conditions may for example include forecasted wind speed. Again, the forecasting may be performed repeatedly, for example each day or several times each day, so that the forecasted wind conditions become more and more precise for a particular day in the future. For few hours ahead, the forecasting will for example lead to a nearly accurate prediction of wind speed. Any known methods for performing such weather forecasting and wind condition forecasting may be employed.

Control system 10 furthermore obtains grid related data 93. Such grid related data may include data obtained from measurements on the grid, for example by respective sensors, such as frequency and voltage measurements, and/or may include external data, that may for example be provided by a grid operator or another data source. Grid data 93 preferably includes at least energy demand related to the power grid 200, or electricity price information related to electric energy fed into power grid 200. Energy demand may for example relate to the demand of consumers coupled to power grid 200; it may also relate to a reception capacity of power grid 200. It is also conceivable that such demand is derived from sensor measurements, for example by evaluating changes to the frequency or the voltage on the power grid 200 (a high demand for electric energy may result in a small voltage drop or frequency drop on the power grid 200). Based on the received power grid data 93, control system 10 forecasts a grid related (external) operating parameter for a future period of time, such as the electricity price or the power demand. The forecasting preferably considers additional parameters, such as information on major events within the respective region fed by the power grid 200, which may consume a higher amount of electric energy. Based on the actual and historical data and the additional information, the power grid related operating parameter, such as electricity price or power demand is forecasted to obtain the respective operating parameter with a certain probability. Again, historical data for the same month may be considered in the forecasting. These forecasted operating parameters of the wind turbine 110 are then used by the control system 10 to derive a control schedule for wind turbine 110. The forecasting may for example employ Bayesian and conditional probabilities, and Monte Carlo simulations, to arrive at the respective forecasted operating parameter associated with a certain probability. Stochastic optimization may then be employed to derive, based on these forecasted operating parameters, a control scheme for a wind turbine 110. This will be explained in more detail hereinafter.

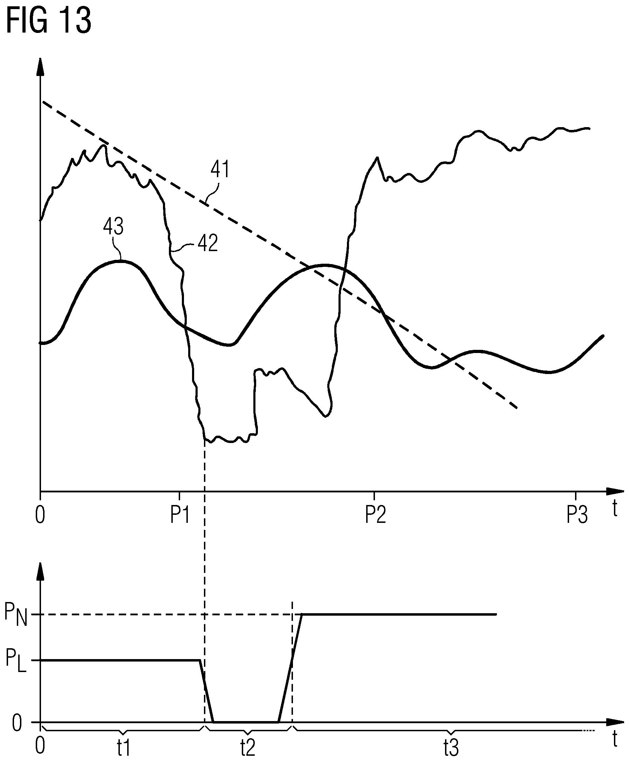

The control scheme determined by control system 10 in particular comprises a first operating period (t1 in Fig. 13) in which wind turbine 110 is operated to produce electric energy that is provided to power grid 200. During the first operating period t1, wind turbine 110 may be operated without power limitation, or the output power of wind turbine 110 may be limited in accordance with the control scheme. Such power output limitation may be invoked by control system 10 to reduce the risk of failure of the wind turbine, as explained in more detail hereinafter. The control scheme further includes a shutdown period t2 during which the wind turbine 110 is shut down. The first operating period t1 at a limited output power P_{L} is for example shown in Fig. 13, lower graph. During the shutdown period t2, the wind turbine can be serviced. The control system 10 schedules the shutdown period t2 and controls the power output of the wind turbine during the operating period t1 such that one or more optimization parameters relative to the wind turbine operation are optimized. Preferably, controller 10 at least minimizes the risk of a wind turbine failure and maximizes the usable energy production. The latter means that the amount of energy provided into the power grid is maximized for times at which the demand for electric power on the grid is high. Accordingly, by such maximization, grid stability is improved, since the electric energy is provided to the power grid 200 when it is needed. Additionally or alternatively, the control scheme may be determined such that the revenue from electric energy provided to power grid 200 is maximized. Since electricity price is generally highest when the power demand is highest, this likewise results in a providing of electric energy to power grid 200 at times of high power demand. Accordingly, also such maximization of revenue will result in improving the stability of power grid 200. Other optimization parameters that the control system 10 may optimize when determining the control scheme may include maximization of the produced electric energy, minimizing of wind turbine costs, which may include cost for service and may further include cost of potential failure, maximizing a wind turbine availability and maximizing a wind turbine utilization. Wind turbine availability may for example mean a contractual availability, so that the wind turbine is available at the times required by contract. Wind turbine utilization refers to the amount of time that the wind turbine is in operation to produce electric energy compared to the amount of time that the wind turbine is shut down or inoperable. Preferably, a combination of two, three or more of such optimization parameters are optimized when determining the control scheme. After the shutdown period t2, the control scheme includes a second operating period t3 (Fig. 13) during which the wind turbine can again be operated without power limitation, at nominal output power P_{N}. The actual power output of the wind turbine will certainly depend on the prevailing wind conditions during the respective operating period.

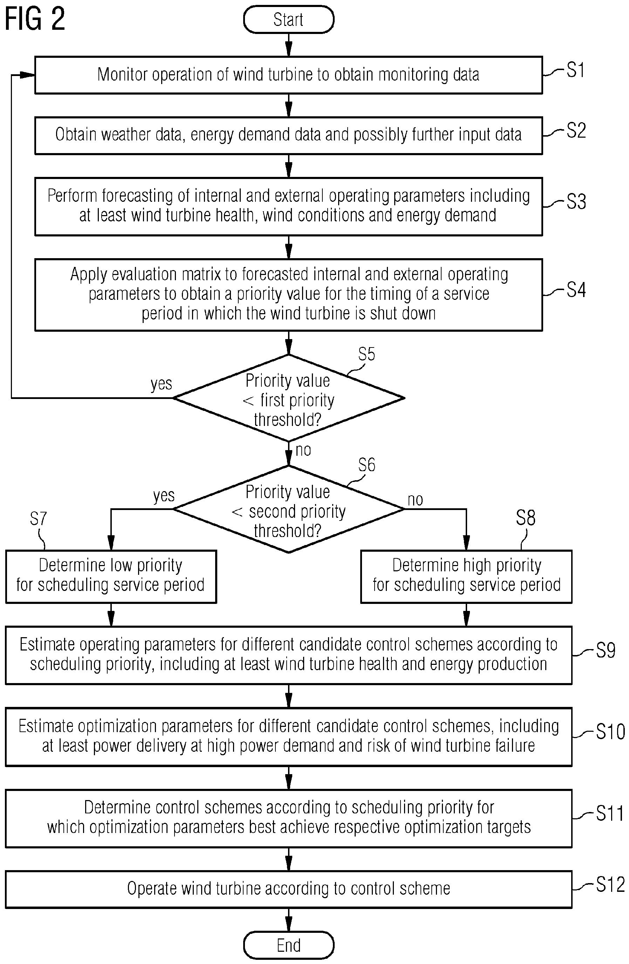

Fig. 2 is a flow-diagram illustrating an embodiment of a method of the invention. The operation of the wind turbine is monitored (using the respective sensors) to obtain the monitoring data 130 in step S1. In step S2, the weather data 91, and power grid related data 93, such as the energy demand data, and possibly further input data is obtained. Such further input data may for example include external data 92 that can for example indicate the availability of spare parts, the availability of a service technician, information related to the skills of a service technician, information related to operating modes of wind farm 100, in particular the capability to increase the power output, and other information useful for determining the control scheme of wind turbine 110.

In step S3 of Fig. 2, operating parameters of the wind turbine are forecasted. This includes the forecasting of wind turbine health and wind conditions as well as energy demand or electricity price. The forecasting can occur in any of the above described manners. The forecasting may furthermore include the forecasting of other external parameters, such as the forecasting of spare part availability, the forecasting of service technician availability, and the like.

In step S4, a priority value for scheduling the shutdown period, i.e. the service for the wind turbine, is determined. An evaluation matrix is applied to the forecasted operating parameters to obtain such priority value that indicates the priority of scheduling the service period in which the wind turbine is shut down. Fig. 3 shows an example for a respective evaluation matrix. The evaluation matrix receives as input the forecasted wind turbine health 31, the forecasted wind conditions 32 and the forecasted energy demand 33 (or alternatively electricity pricing). These forecasted operating parameters each have a forecasted value 35, which may for example be determined for a certain future point in time (e.g., one week after the current date), or may be an average value over a certain future time period, such as over a period of two, three, four or more days starting e.g. one week after the current date. As shown, to facilitate the matrix, the values of the forecasted operating parameters 31, 32, 33 may be discretized to only two, three, four or more levels, such as the three levels "high", "medium" and "low" in the present example. This is illustrated in Fig. 4 for the wind turbine health 31, wherein Fig. 4 shows a health graph that for example indicates the risk of failure which increases with time. Thresholds T1, T2, T3 can for example be defined, and if the risk is below the first threshold T1, the health is considered to be high, if it is between T1 and T2, it is considered to be medium and if it is above T2, e.g. between T2 and T3, the health is considered to be low. Respective thresholds may be employed for the other operating parameters to define high, medium and low value ranges for the range of possible values of the respective parameter.

The evaluation matrix then assigns to each combination of the value of the forecasted operating parameters 31, 32, 33 an output value in the form of the scheduling priority Pₛ. Again, respective thresholds may be employed for the priority value to indicate a low priority (Pₛ<0), a medium priority (0<Pₛ<0.25), or a high priority (Pₛ>0.25). It should be clear that these are only exemplary values, and the value ranges of the matrix output may be selected as desired.

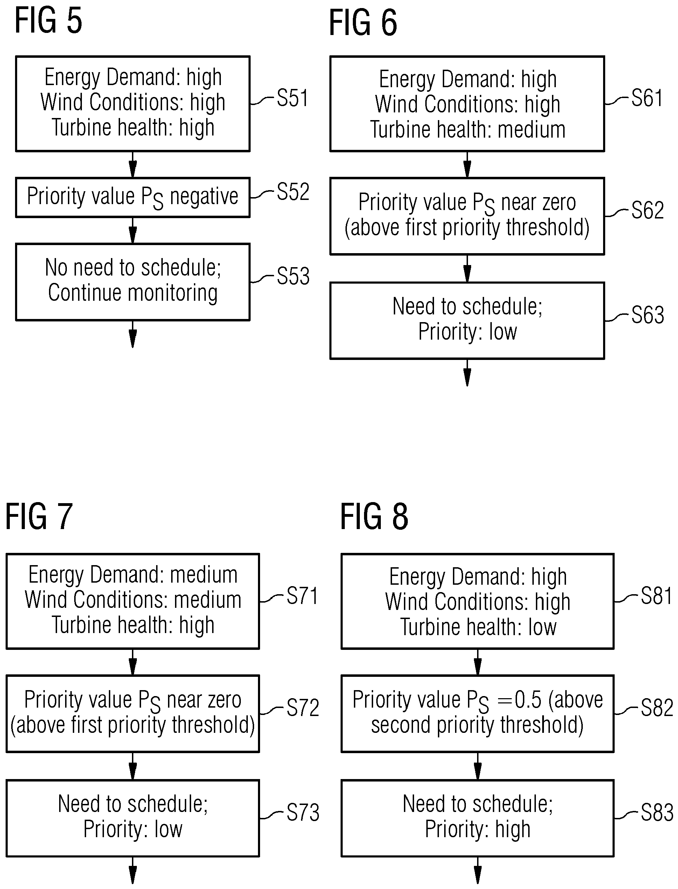

The values of the evaluation matrix are configured such that the output (i.e. the prioritization of the scheduling of the service) results in an optimization of the one or more optimization parameters. Accordingly, the initial setup of the matrix may be made on the basis of certain situations that can occur and for which it is known how the priorities are to be set in order to arrive at the desired optimization. Preferably, the matrix is furthermore trained, for example by making use of historical data, such as known scenarios resulting in known control schemes, or by making use of actual decisions of a wind turbine operator made during operation that may deviate from the prioritization output by the matrix. Examples for how the matrix may be configured are illustrated in Figs. 5 to 9. In Fig. 5, all three forecasted operating parameters 31, 32, and 33 have a high value. The matrix is configured to output a negative value for Pₛ in such case (S52), e.g. below a first priority threshold. Such value indicates that there is no need to schedule a shutdown period and a service operation, and the monitoring and forecasting can continue (step S53). In Fig. 6, the forecasted operating parameters indicate high energy demand and wind conditions and a medium turbine health (S61). The matrix may be configured to provide in such case a priority value above the first priority threshold (e.g. near zero) (S62), indicating the need to schedule a service, yet at low priority (S63). The wind turbine can accordingly make use of the forecasted good wind and energy demand conditions while the risk of wind turbine failure is kept low due to the scheduled service, thus optimizing the respective optimization parameters.

In Fig. 7, the energy demand and wind conditions are medium and the turbine health is high (S71). In this situation the matrix is likewise configured to provide a priority value above the first priority threshold, for example near zero, indicating a need to schedule a service with low priority. Although the turbine health is high, the only medium wind conditions can be used to perform the service such that the loss in energy production during the shutdown period is kept low, thereby maximizing the usable energy production and minimizing risk. In the example of Fig. 8, forecasted operating parameters indicate high energy demand and wind conditions and a low wind turbine health (S81). In such situation, the matrix is configured to provide a priority value above a second priority threshold, such as a value of 0.5 (S82), indicating a high priority to schedule the service (S83). Scheduling service with high priority (i.e. close to the current date) will result in a certain loss of energy production in these good wind conditions. However, the risk of a turbine failure is high, which would lead to a significantly larger loss in energy production. Accordingly, the service is scheduled with a high (or the highest) priority to ensure that the serviced wind turbine is operational to make use of the good wind conditions and the high energy demand, thus minimizing the risk of turbine failure and maximizing the usable energy production (or revenue).

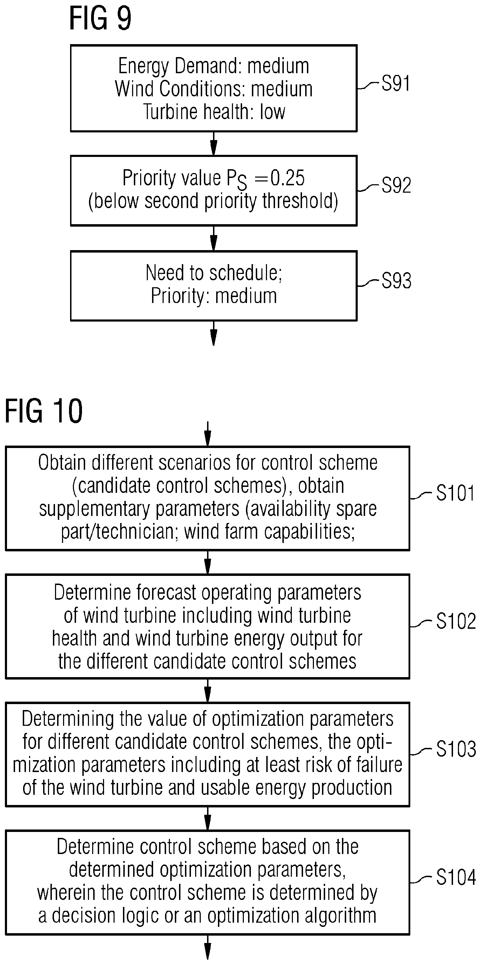

Fig. 9 is a further example in which the forecasted operating parameters indicate a low wind turbine health and medium energy demand and wind conditions (S91). The matrix is configured to return a priority value below the second priority threshold but above the first priority threshold, for example a value of Pₛ = 0.25 (S92). Such value may indicate the need to schedule the service at a medium priority (S93). In this example, failure of the wind turbine would not result in such significant loss of usable power production as in the case of Fig. 8. Furthermore, as the wind conditions are only medium, the risk of damage to the wind turbine is lower due to lower mechanical loading. Accordingly, the prioritization of the service scheduling is again provided by the matrix such that a risk is minimized while the usable energy production is maximized.

It should be clear that the above is only an example, and that the granularity of the priority determination may be changed, for example by employing further thresholds and thus a finer granularity, or that the thresholds may be set differently (for example, only high and medium priorities, or four priority levels may be employed). The resulting priority for scheduling the shutdown period may correspond to a period of time within which the service is to be scheduled. The highest priority may for example correspond to the time period from the current date to three or four days from the current date, the medium priority to a time period of between one week or two weeks from the current date, and a low priority to a time period of between two weeks and four weeks from the current date. (i.e. to be scheduled within the next three or four days, to be scheduled within the next two weeks, or to be scheduled within the next four weeks).

The forecasting of the wind turbine health may consider the forecasted weather conditions or wind conditions, it may in particular consider any forecasted weather events, such as typhoons, hurricanes and the like. Wind conditions and such events can have a significant impact on the structural integrity of the wind turbine and of wind turbine components, as they for example influence the loading of the wind turbine mechanical components, so that their consideration improves the forecasting of wind turbine health.

For example with respect to Fig. 13, if the matrix returns a low priority value, the shutdown period may be scheduled between the current date (zero) and a later point in time P3, if the priority is medium, it may be scheduled between the current date and an intermediate point in time P2, and if the priority is high, it may be scheduled between the current date and an earlier point in time P1. Alternatively, it may be scheduled between P2 and P3 for a low priority, between P1 and P2 for a medium priority and between zero and P1 for a high priority. P2 may for example correspond to three - four days, P2 to one week and P3 to two weeks, three weeks or four weeks.

Alternatively, instead of employing such evaluation matrix as shown in Fig. 3, the method may directly employ the decision logic illustrated in Figs. 5 to 9 for deriving, from the input forecasted operating parameters, the priority value. Such logic may then be defined for the possible combinations of input values.

Turning back to Fig. 2, the method determines in step S5 if the priority value is below the first priority threshold (example of Fig. 5). If so, the method continues with monitoring the operation of the wind turbine and making the respective forecasts. The forecasting may for example be performed again after a certain period of time, such as one or more days or one or more weeks.

If it is not below the first priority threshold, a need to schedule the service period is determined and it is checked in step S6 if the priority value is below a second priority threshold. If so, a low priority for scheduling the service period is determined (step S7), and otherwise, a high priority for scheduling the service period is determined (step S8). It should be clear that as indicated above, further thresholds may be used to derive the priority with a higher granularity may be used, such as using a second and a third priority threshold to derive low, medium and high priorities.

In the subsequent steps, an optimization algorithm is employed that determines the control scheme such that the one or more optimization parameters are optimized. In the illustrated example, the method estimates in step S9 the operating parameters of the wind turbine for different candidate control schemes according to the determined priority. The candidate control schemes may for example comprise the shutdown period t2 that is arranged at different points in time within the time period indicated by the priority value (i.e. within P1, P2 or P3). The candidate control schemes may furthermore comprise different limitations of output power of the wind turbine during the first operating period t1, as illustrated in the lower diagram of Fig. 13. Output power may for example not be limited, be limited by a low amount (e.g. to >75%, or by a higher amount, e.g. <75%). Wind turbine health and energy production may at least be estimated in step S9. In step S10, the optimization parameters, preferably at least usable power production and risk of wind turbine failure, are estimated for the different candidate control scheme on the basis of the forecasted operating parameters. The estimations in steps S9 and S10 may be performed for a predetermined period of time, for example for the respective time period determined by the priority value (period P1, P2 or P3 in Fig. 13). In step S11, the candidate control scheme is then selected for which the one or more optimization parameters best achieve the respective optimization target. As previously indicated, this may include the optimization of a combination of optimization parameters, wherein the optimization parameters may be weighted to reflect their respective importance for the wind turbine operation. The algorithm will generally select a control scheme for which the shutdown period is scheduled at days of low wind and/or low power demand/electricity price, since the loss in usable energy production is lowest for such dates. The method will be able to determine whether, for example for a low wind turbine health status, it is better to run the wind turbine at full power and service it earlier, or limit the power output of the wind turbine and perform the service at a later date. In particular, loss of usable energy production and the risk of wind turbine failure are minimized. In step S12, the wind turbine is then operated according to the control scheme. In the example of Fig. 13, the wind turbine is for example operated at a limited power output P_{L}, thereby reducing the risk of failure, and the shutdown period t2 is scheduled for a time of low wind conditions. In Fig. 13, curve 31 indicates the forecasted wind turbine health, which is degrading with time. Curve 42 indicates the wind conditions, in particular wind speed. Curve 33 indicates the power demand on the power grid or electricity price. As these are only illustrative examples, no absolute numbers are given. In the example of Fig. 13, the evaluation matrix has returned a medium priority, so that the shutdown period t2 is scheduled between P1 and P2.

Fig. 10 illustrates the optimization of the one or more optimization parameters and thus steps S9 to S11 of Fig. 2 in more detail. In step S101, the candidate control schemes are obtained, for example by introducing different uncertainties or variations in the controlled variables. Furthermore, supplementary parameters are obtained, for example from the external data source 92. Such supplementary parameters include for example the availability of spare parts, the availability of a service technician, the skill level of the available service technician, as such parameters further influence the scheduling of the shutdown period. Furthermore, the capability of the wind farm to compensate for energy production losses when limiting the power output of the wind turbine may be obtained as a supplementary parameter. Current spare part availability and predicted spare part availability for one or more months may be obtained from an inventory database. Technician skills and availability may be obtained from a resource database.

As another example, when considering supplementary parameters, the cost of a spare part or of service technician availability may be different for different points in time. Accordingly, by considering cost as an optimization parameter, cost can be kept low and revenue be maximized. Furthermore, by considering the capability of the wind farm to compensate power limitations of the wind turbine, control schemes can be employed in which the power output of the wind turbine is limited, thus prolonging the time to failure, while energy output is not lost as it is compensated by the wind farm. Exemplary schemes for increasing the power output of the remaining wind turbines of the wind farm include high wind ride-through schemes, in which the wind turbines continue to produce power during high wind conditions, or power bus schemes in which the power output can be increased in high wind conditions.

In step S102, the operating parameters of the wind turbine are forecasted for the different candidate control schemes. In particular, the wind turbine health and the wind turbine energy output are forecasted for the respective (same) period of time. Such forecasting may also include the forecasting of spare part availability, the forecasting of service technician availability, forecasting the cost of failure, the forecasting of electricity prices, forecasting of the wind conditions (speed), and the like. Some of these forecasted parameters may be directly obtained from the respective data source, such as forecasted spare availability, while others may be either forecasted by any of the above described methods, or may be forecasted by using correlations with other operating parameters. As an example, the correlation between different interdependent variables may be identified.

A forecasted energy output may for example be correlated to forecasted wind speed. Forecasted spare part availability may be correlated with a predicted turbine health, for example over a fleet of corresponding wind turbines, as the spare part may not be available if required for servicing other wind turbines. An estimated risk and cost of failure may for example be correlated to technician skills and availability, forecasted spare part availability and forecasted energy output (risk is higher if the spare part is not available, and if the wind turbine has a high energy output). By identifying and using such correlations between variables, the uncertainty of the forecast of the other variables may be reduced. The correlation values may initially be based on historical data, yet they may be updated as new data becomes available. For example, deep learning or reinforcement learning may be used to train the correlation values. The obtaining of parameters and the forecasting that is unrelated to candidate control schemes may also be performed as part of steps S1-S3 of Fig. 2.

In step S103, the optimization parameters are estimated for the different candidate control schemes. Preferably, at least risk of failure of the wind turbine and usable energy production are estimated as optimization parameters. Other optimization parameters may include repair time (minimization); cost (minimization); revenue (maximization); contractual availability (maximization); and utilization (maximization). Again, correlation between different interdependent variables may be identified and employed in the estimation. For example, the utilization may be correlated with the contractual availability and the repair time. Revenue may be correlated with risk, costs and utilization. Respective correlation factors (X, Y ...) may be identified as outlined above, for example by using historical data and learning methods such as deep learning and reinforcement learning.

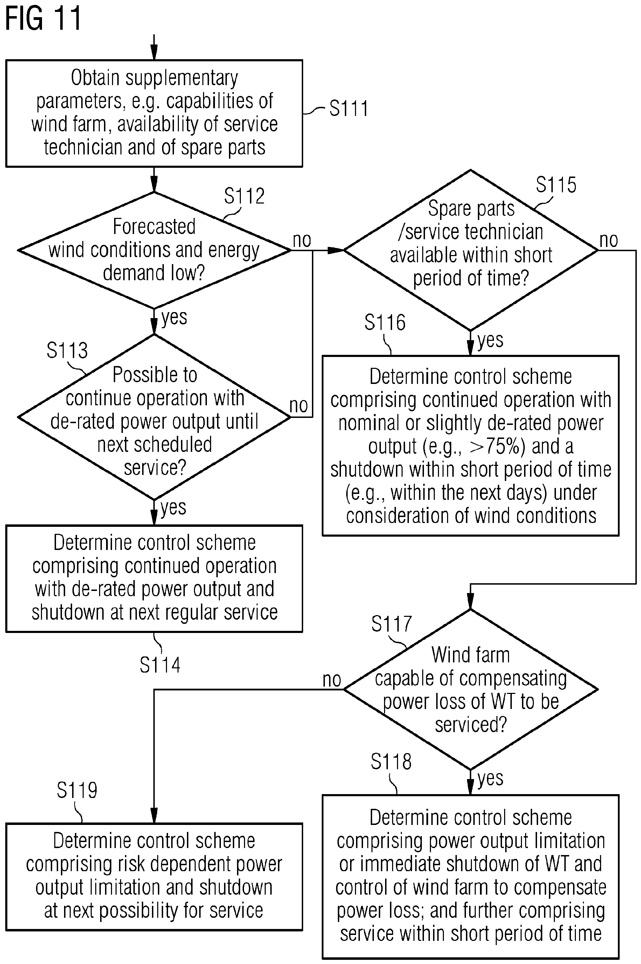

By using such forecasting and such correlations, uncertain parameters may be modeled through robust control between the interdependent variables. As an example, a candidate control scheme for which the shutdown period is scheduled at time of high wind speed and high power demand will result in a lower usable energy production than a candidate control schedule for which the shutdown period is scheduled at low wind speed or low power demand. The optimization parameters obtained by this estimation may then for example be scored for the respective candidate control scheme (e.g. depending on the distance to the best value achieved by all schemes), and the scores may be weighted, thus resulting at an overall score for each candidate control scheme. The best ranked scheme may then be used to determine the final control scheme in step S104. Besides employing such optimization algorithm, it is also possible to directly determine the candidate control scheme on the basis of a decision logic, an example for which is illustrated in Fig. 11.

The method of Fig. 11 assumes that the wind turbine health is lower than "high". In step Sill, the supplementary parameters are obtained, such as the capabilities of the wind farm and the availability of service technician/spare parts. If the forecasted wind conditions and energy demand are low in step S112, and if it is possible to continue the operation of the wind turbine with a limited power output until the next regular service period (step S113), a control scheme is determined that comprises a continued operation (first operating period) with the limitation of the power output (de-rating) and a shutdown at the next regular service interval, wherein the precise date may again be determined by the methods described herein. If in step S115, the spare parts and service technician are available within a short period of time, e.g. within one to four days, a control scheme is determined in step S116 that comprises a continued operation with the nominal output power or with a slightly limited output power, for example larger than 75% of the nominal output power. It further includes a shutdown of the wind turbine within the short period of time, i.e. within the next one to four days, wherein the precise date is selected in dependence on the wind conditions and the spare part/service technician availability.

If there is no immediate availability, it is checked in step S117 if the wind farm is capable of compensating the power loss of the wind turbine to be serviced. If such compensation is possible, a control scheme is determined in step S118 that comprises a significant power output limitation or immediate shutdown of the wind turbine and the controlling of the wind farm so as to compensate for the respective power loss. It further comprises the scheduling of the shutdown period (the service) within a short period of time, in particular at the earliest possible time at which service technician and spare parts are available. If no such compensation is possible, the control scheme may comprise a risk dependent power output limitation and shutdown of the wind turbine and a scheduling of the shutdown period at the next possibility. In particular, spare parts and service technician may be arranged at highest priority and may be sourced from different (new) suppliers.

The above decision logic likewise optimizes the one or more optimization parameters. The control scheme determined in step S114 minimizes the risk, since the output power of the wind turbine is limited, and it keeps the loss in usable power production low, since only little production is lost in such low wind/low demand conditions. The control scheme determined in step S116 likewise results in a low risk, since the wind turbine only needs to continue operation for few next days. Usable power production is likewise maximized, since power output of the wind turbine is kept high. The control scheme determined in step S118 results in a low risk, since the power output is limited significantly or the wind turbine is even shut down. The usable energy production on the other hand is maximized, since the loss in production is compensated by the wind farm. For the control scheme in step S119, risk is likewise reduced by power limitation, while the loss in energy production is kept low by prioritizing the service scheduling.

The above decision logic illustrates how different control schemes influence the optimization parameters. Accordingly, the optimization algorithm is employed to select the control scheme that results in the best set of optimization parameters. As outlined, this will for example include the operation with reduced power until low wind and low power demand conditions prevail, if the respective increase in risk is outweighed by the advantages in usable energy production. Compared to a conventional service scheduling at regular time intervals, the service may thus be performed earlier or may be performed later, depending on the respective forecasted internal and external operating parameters and the estimated optimization parameters. Compared to the conventional scheduling, the risk of failure is thus reduced significantly, and the power output of the wind turbine and in particular the usable energy production or revenue may be significantly higher.

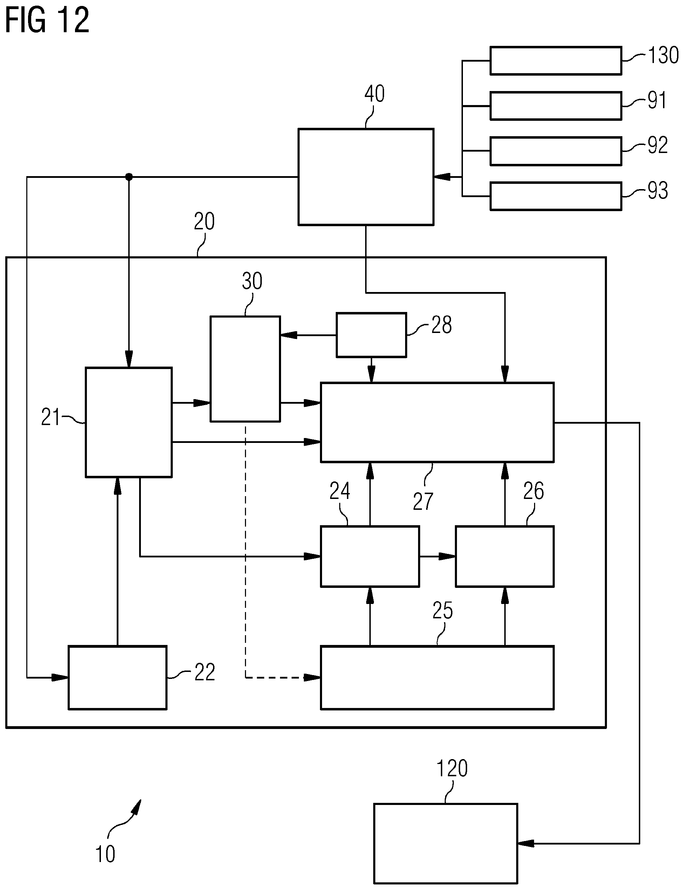

Fig. 12 is a schematic diagram showing details of the control system 10. The control system 10 may for example include a data acquisition module 40 that obtains the operating parameters from different sources, such as monitoring data 130 from wind turbine sensors, weather data 91, external data and/or supplementary parameters 92 and power grid data 93. A forecasting module 21 forecasts the respective operating parameters. For example, a wind turbine health estimation unit 22 may be provided and may estimate the wind turbine health on the basis of the acquired sensor data and historical data. Forecasting unit 21 may use the estimated health and the forecasted wind conditions to forecast the wind turbine health. As indicated above, module 21 may employ correlations to derive forecasted operating parameters. Scenario module 25 may provide candidate control schemes, in accordance with which the module 24 forecasts the operating parameters for the different candidate control schemes. It should be clear that for example forecasted wind conditions will not depend on the candidate control scheme, whereas the expected power output of the wind turbine will certainly depend on such control scheme, for example on whether power output of the turbine is limited and under what conditions the turbine is shut down. Priority determination module 30 implements the matrix illustrated in Fig. 3 and gives out the priority value, for example either as a numerical value or as an indication of high, medium or low priority. This priority may be used in the scenario unit 25 in the determination of the candidate control schemes. Based on the forecasted operating parameters and on the candidate control schemes, the optimization parameter estimation module 26 then estimates the one or more optimization parameters. The control scheme determination module 27 finally determines the final control scheme for which the combination of optimization parameters achieves the best possible values, as outlined in detail above. It may for example score and weigh the optimization parameters estimated for the different candidate control schemes and then select the highest ranking candidate control scheme as a final control scheme. The final control scheme is then provided to wind turbine controller 120 to control the operation of the wind turbine. A training module 28 may furthermore be provided to train for example the priority determination module 30 (in particular the values of the evaluation matrix). It may further train the respective correlation values used for example by the module 24 for forecasting operating parameters. It may also train aspects of the control scheme determination module 27, such as weighing and ranking of optimization parameters, and correlation values used by the optimization parameter estimation module 26. Module 20 thus determines on the basis of the received input data the control scheme that provides a reduced risk of turbine failure and a maximum usable power production.

Module 20 and its sub-modules may be implemented on a computing device comprising a processing unit 11 and a memory 12, as illustrated in Fig. 1. The memory 12 may store control instructions which, when executed by the processing unit 11, implement the modules 21 to 30. In particular, these control instructions may implement any of the methods described herein. The processing unit 11 may for example be a microprocessor, or another processing unit such as an application specific integrated circuit, a digital signal processor or the like. The memory 12 may comprise volatile and non-volatile memory, such as flash-memory, a hard disk drive, RAM, ROM, and the like. Data acquisition module 40 may comprise input and output interfaces, for example for communicating with sensors and other data sources such as databases, e.g. a network interface. Control system 10 may furthermore comprise a user interface including for example a display, a keyboard, a mouse and the like. Furthermore, it comprises an input/output interface towards the wind turbine controller 120. As indicated above, the control system 10 may be implemented on a wind farm level, or may in other implementations form part of a wind turbine controller 120, or may partly be implemented by a wind turbine controller 120.

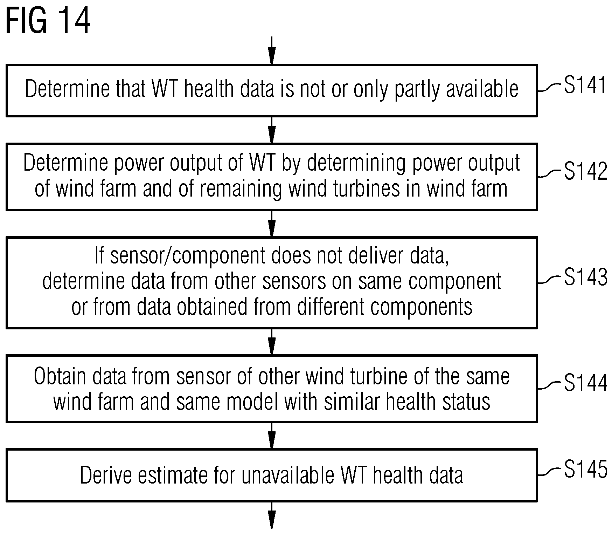

On some occasions, data required for forecasting the wind turbine health may not be available or only partly be available (step S141 of Fig. 14), for example if a sensor on a wind turbine component is damaged or the communication connection is interrupted. In such situation, the power output of the wind turbine can for example be determined by determining the power output of the wind farm and the power output of the individual remaining wind turbines in the wind farm (step S142). By deriving the power output of the wind turbine in such a way, it is already possible to make a rough estimate of wind turbine health. If a particular sensor or component does not deliver data, such data may be reconstructed by obtaining data from other sensors on the same component, or by obtaining data from different components of the wind turbine that are related to the component suffering from sensor damage. As an example, a bearing may include sensors measuring the temperature of an inner and an outer bearing casing and may further have a sensor to measure vibration and/or strain. If one of the temperature sensors is not providing measurement values, or provides values which are outside the sensor specification range (faulty sensor), the method may obtain data from the other temperature sensor and check if these readings are consistent. If so, the temperature of the damaged sensor may be derived. Additionally or alternatively, measurements may be obtained from vibration or strain sensors to evaluate the bearing functionality. This also applies to other systems; if a temperature sensor of a system is not working, the temperature of a cooling system that cools such component may for example be checked. Further, additionally or alternatively, sensor data may be obtained from another wind turbine of the same wind farm (and preferably the same model) that has a similar health status (which may have been determined while the sensor was still working). The sensor data may then be estimated on the basis of data obtained from a corresponding sensor of the similar wind turbine (step S144). The wind turbine health data that is not available may thus be estimated from one or more of the above measures (step S145). Accordingly, it is possible to derive an accurate health status of the wind turbine even though health data for the wind turbine is lacking, for example due to a broken sensor.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of a wind turbine, comprising:
- determining a control scheme for the wind turbine (110), wherein the control scheme specifies for a future period of time at least a first operating period (t1) in which the wind turbine (110) is operated to provide an output of electrical power to a power grid (200) and at least one shutdown period (t2) in which the wind turbine (110) is shut down, the shutdown period (t2) being arranged temporally after the first operating period (t1), and
- operating the wind turbine (110) in accordance with the control scheme,
wherein determining the control scheme comprises:
- obtaining input data, wherein obtaining input data comprises at least monitoring operation of the wind turbine (110) to obtain monitoring data related to the integrity of the wind turbine (110), and obtaining weather data indicating weather conditions,
- forecasting, by a processing unit (11), two or more operating parameters of the wind turbine (110), said forecasting including at least the forecasting of wind turbine health on the basis of the monitoring data, and the forecasting of wind conditions on the basis of the obtained weather data; and
- based on the at least two or more forecasted operating parameters of the wind turbine (110), determining the control scheme for the wind turbine (110) such that one or more optimization parameters are optimized, wherein the optimization of the one or more optimization parameters includes at least one of maximizing a wind turbine energy production, minimizing a risk of wind turbine failure, maximizing a usable energy production by maximizing the electric energy produced by the wind turbine (110) at times of higher than average energy demand on the power grid (200), minimizing wind turbine cost; maximizing a revenue from electric power generated by the wind turbine (110), maximizing a wind turbine availability, and maximizing a wind turbine utilization.

2. The method according to claim 1, wherein obtaining input data further comprises obtaining power grid data indicative of an energy demand of the power grid (200); wherein forecasting the two or more operating parameters of the wind turbine (110) further comprises the forecasting of energy demand based on the obtained power grid data; and wherein the optimization of the one or more optimization parameters comprises at least maximizing the usable energy production.

3. The method according to claim 1 or 2, wherein obtaining input data further comprises obtaining electricity price information for electric power supplied by the wind turbine (110); wherein forecasting the two or more operating parameters of the wind turbine (110) further comprises the forecasting of electricity price; and wherein the optimization of the one or more optimization parameters comprises the maximization of revenue from electric power generated by the wind turbine (110).

4. The method according to any one of the preceding claims, wherein the determining of the control scheme for the wind turbine (110) comprises the application of an evaluation matrix to at least said two forecasted operating parameters, wherein the evaluation matrix assigns to the combination of values of the at least two forecasted operating parameters an output value, the output value being a priority value (P_{S}) that indicates a priority of scheduling the shutdown period (t2) in the control scheme of the wind turbine (110).

5. The method according to claim 4, wherein the evaluation matrix employs as an input at least three operating parameters including the forecasted wind turbine health, the forecasted wind conditions and one of a forecasted energy demand on the power grid (200) or a forecasted electricity price for electric power produced by the wind turbine (110), wherein the evaluation matrix assigns to the combination of values of the three operating parameters a respective priority value (Ps) .

6. The method according to claim 4 or 5, wherein the priority value (P_{S}) determines the priority to schedule the shutdown period in the control scheme to allow servicing of the wind turbine, wherein control scheme is determined to comprise a shorter first operating period (t1) for a higher priority value.

7. The method according to any one of the preceding claims, wherein optimizing the one or more optimization parameters comprises estimating the one or more optimization parameters for different candidate control schemes that comprise differences in the timing of the shutdown period (t2) and/or differences in a limitation of electrical power generated by the wind turbine (110) during the first operating period (t1), and selecting the control scheme for which the one or more optimization parameters best meet a respective optimization target.

8. The method according to claim 7 when dependent on any one of claims 4-6, wherein the priority value (P_{S}) determines a period of time within which the shutdown period (t2) is scheduled in the control scheme, wherein said period of time is determined to end closer to a current date the higher the priority value is, wherein the candidate control schemes vary the timing of the shutdown period (t2) within the respective time period that corresponds to the priority value (P_{S}) obtained from the evaluation matrix.

9. The method according to claim 7 or 8, wherein optimizing the one or more optimization parameters comprises estimating one or more further operating parameters that depend on the respective candidate control scheme, wherein the one or more further operating parameters include at least a forecasted electric energy generation by the wind turbine (110), and using the one or more further operating parameters to estimate the one or more optimization parameters for the respective candidate control scheme.

10. The method according to any one of the preceding claims, wherein the one or more of the optimization parameters and/or one or more of the operating parameters are estimated based on a correlation with other optimization parameters and/or operating parameters, wherein the method preferably further comprises training the correlation values based on historical data for the wind turbine (110) or for a corresponding wind turbine and/or based on input of a wind turbine operator.

11. The method according to any one of the preceding claims, wherein the method further comprises obtaining one or more supplementary parameters and determining the control scheme under consideration of the one or more supplementary parameters, the supplementary parameters preferably including one or more of: a capacity of wind turbines of a wind farm (100) of which the wind turbine (110) forms part to compensate an output power limitation of the wind turbine (110), a forecasted availability of a spare part, a forecasted availability of a service technician, and a skill level of an available service technician.

12. The method according to any one of the preceding claims, wherein determining a control schedule by optimizing the one or more optimization parameters comprises employing a decision logic that determines the control schedule by making a decision on the scheduling of the shutdown period (t2) and/or on a limitation of the power output of the wind turbine (110) during the first operating period (t1), wherein the decision logic makes the respective decision on the basis of one or more of the forecasted operating parameters, wherein decision stages of the decision logic are configured such that the resulting control scheme optimizes the one or more optimization parameters.

13. The method according to any one of the preceding claims, wherein the wind turbine (110) is part of a wind farm (200), wherein, if a higher than average priority to schedule the shutdown period is determined on the basis of the two or more forecasted operating parameters, the method comprises determining if wind turbines of the wind farm (200) are capable of compensating a output power limitation of the wind turbine (110), and in the affirmative, including in the control scheme a limitation of the output power of the wind turbine (110) during the first operating period (t1) and including in the control scheme the control of the other wind turbines so as to compensate for the output power limitation during the first operating period (t1).

14. A control system (10) for controlling the operation of the wind turbine (110), wherein the control system (10) is coupled to one or more sensors (130) of the wind turbine (110) to obtain monitoring data related to the integrity of the wind turbine (110) and is further coupled to a data source (91) for obtaining weather data indicating weather conditions, wherein the control system (10) comprises a processing unit (11) and a memory (12), the memory (12) storing control instructions which when executed by the processing unit (11) of the control system (10), perform the method according to any one of the preceding claims.

15. A computer program for controlling a wind turbine, wherein the computer program comprises control instructions which, when executed by a processing unit (11) of a control system (10) that controls the operation of the wind turbine (110), cause the processing unit (11) to perform the method of any one of claims 1 to 13.
